# EUROPEAN PATENT APPLICATION

(11) **EP 2 298 489 A1**
(43) Date of publication of application: **23.03.2011**
(21) Application number: 10174792.1
(22) Date of filing: 01.09.2010
(51) Int. Cl.: B23K 35/30, C22C 19/05, F01D 5/00, F01D 5/28

(54) **Superalloy composition and method of forming a turbine engine component**

(30) Priority: 15.09.2009 US 559890
(71) Applicant: General Electric Company, Schenectady, NY 12345 (US)
(72) Inventor: Feng, Ganjiang, Greenville, SC 29615 (US); Arnett, Michael Douglas, Greenville, SC 29615 (US); Nowak, Daniel Anthony, Greenville, SC 29615 (US)
(74) Representative: Szary, Anne Catherine

(57) **Abstract**

A nickel-base composition is disclosed that includes:
about 15 to about 20 wt % Co;
about 10 to about 19 wt % Cr;
about 2.5 to about 3.4 wt % Al;
less than about 0.5 wt % Ta;
less than about 1.0 wt % Mo;
less than about 0.06 wt % Zr;
less than about 0.04 wt % B;
about 1.1 to about 1.5 wt % Nb;
about 3.0 to about 3.9 wt % Ti;
about 3 to about 5 wt. % W;
about 0.03 to about 0.07 wt. % C; and
balance Ni; wherein aluminum, titanium, niobium, and tantalum are present within the alloy in a combined amount of 9 to 14 atomic percent.

## Description

### BACKGROUND OF THE INVENTION

The subject matter disclosed herein relates to the field of turbine engine components. In particular, the present disclosure relates to a superalloy composition and a repaired or fabricated component utilizing a superalloy composition.

The efficiency of gas turbine engines is dependent, in part, on the amount or degree of leakage of combustion gases between the turbine blades or buckets and the shroud of the turbine section of the engine. To minimize the gap, the tips are generally subjected to a precise machining operation. However, due to machining tolerances, thermal expansion differences between the components, and dynamic effects, typically some degree of rubbing between the tips and the shroud occurs.

Due to the rubbing contact, such as after extended service in the field, the base material of the blade is exposed, generally leading to corrosion and/or oxidation of the blade. Extended corrosion or oxidation leads to an increase in leakage between the blade and the shroud and consequent performance and efficiency losses. In view of the relative cost of turbine components such as blades or buckets, it has become common-place to repair worn components as a cost-effective option to replacement, In a known repair technique, a weld wire formed of a weldable superalloy composition is used in a "build-up" process to restore the blade to its original or near-original geometric configuration. For example, a nickel-base superalloy weld wire can be used in a tungsten arc welding process by making multiple passes over the tip region of a nickel-base superalloy blade. Following welding, the tip region is machined.

Additionally, nickel-base superalloys, such as gamma prime-strengthened nickel-base superalloys, are widely used to form or fabricate certain high temperature components of gas turbine engines, including combustors and turbine nozzles or vanes and buckets or blades. While high-temperature superalloy components can often be formed by a single casting, circumstances exist where superalloy components are preferably or are required to be fabricated by welding. As an example, in a high pressure turbine nozzle assembly in which the airfoils are formed of single-crystal (SX) superalloy and the inner and outer band castings are formed of a different superalloy or have a different microstructure, e.g., equiaxed, the airfoils would be assembled with the bands by welding or some other suitable method. Such components must generally be thermally stress-relieved after welding to relax residual stresses induced during cooldown following the welding operation. If formed of a gamma prime-strengthened nickel-base superalloy, heat treatment also provides stress relief by dissolution of a portion of the hardening gamma prime phase. Generally, the heat treatment parameters will vary depending on the superalloy composition, the amount of residual stress relief and dissolution required, furnace design, component geometry and many other factors.

Even if all appropriate precautions are taken, structural welds of gamma prime-strengthened nickel-base superalloy castings are known to form strain age cracks upon cooling from welding and post-weld heat treatment, such as during aging when the gamma prime phase is re-precipitated following solution heat treatment. The cause of these cracks is due at least in part to the residual stress produced during the welding and aging cycles. Cracking is particularly likely after welding castings formed of high gamma prime-strengthened nickel-base superalloys, which contain significant amounts (three weight percent or more) of aluminum and/or titanium. Aluminum and titanium are the primary elements forming the gamma prime phase that increases the strength, but also reduces the ductility, of nickel-base superalloys. High power levels can be required to weld such superalloys, which can promote cracking as a result of large volumes of the castings being consumed, creating high residual stresses from weld volume shrinkage, as well as higher levels of gamma prime formers in the weldment. The likelihood of cracking is further increased if the castings being welded are formed of dissimilar materials, e.g., with respect to chemistry, crystallography, coefficient of expansion, and other material parameters.

As a result of the tendency for cracking, components that must be fabricated by welding are often not formed of high gamma prime-strengthened nickel-base superalloys, but instead are formed from other high-temperature superalloys or are limited to being joined with fasteners or by brazing. However, the use of fasteners requires flanges, and brazing typically requires a large interface (faying surface), both of which result in increased weight. In addition, these assembly methods require machining operations that must be closely controlled in order to establish precise fit-up gaps. Finally, even if crack-free weldment is successfully produced, various disadvantages can result, including a weak interface joint, a large joint gap, and compromised properties depending on the particular braze filler used.

Compositions of nickel-base superalloys are characterized by controlled concentrations of certain critical alloying elements to achieve a desired mix of properties. For use in gas turbine applications, such properties include, in addition to weldability as noted above, high temperature creep strength, oxidation and corrosion resistance, resistance to low cycle fatigue, phase stability, and castability. If attempting to optimize any one of the desired properties of a superalloy, other properties are often adversely affected.

While certain weld alloys are known, there continues to be a demand for further improved weld alloys, particularly, nickel-base weld alloys for nickel-base superalloy component fabrication and repair. In this regard, the present inventors have recognized a need for a nickel-base superalloy that has increased gamma prime strengthening and ductility. It is also desired to provide an alloy that matches the physical properties of a high gamma prime base alloy, thereby improving the Low Cycle Fatigue (LCF) properties of the weldment.

### BRIEF DESCRIPTION OF THE INVENTION

In an exemplary embodiment, a superalloy composition is disclosed that includes:
about 15 to about 20 wt % Co;
about 10 to about 19 wt % Cr;
about 2.5 to about 3.4 wt % Al;
less than about 0.5 wt % Ta;
less than about 1.0 wt % Mo;
less than about 0.06 wt % Zr;
less than about 0.04 wt % B;
about 1.1 to about 1.5 wt % Nb;
about 3.0 to about 3.9 wt % Ti;
about 3 to about 5 wt. % W;
about 0.03 to about 0.07 wt. % C; and
balance Ni; wherein aluminum, titanium, niobium, and tantalum are present within the alloy in a combined amount of 9 to 14 atomic percent.

In another exemplary embodiment, a component is disclosed that includes a portion having:
about 15 to about 20 wt % Co;
about 10 to about 19 wt % Cr;
about 2.5 to about 3.4 wt % Al;
less than about 0.5 wt % Ta;
less than about 1.0 wt % Mo;
less than about 0.06 wt % Zr;
less than about 0.04 wt % B;
about 1.1 to about 1.5 wt % Nb;
about 3.0 to about 3.9 wt % Ti;
about 3 to about 5 wt % W;
about 0.03 to about 0.07 wt % C; and
balance Ni; wherein aluminum, titanium, niobium, and tantalum are present within the alloy in a combined amount of 9 to 14 atomic percent.

In yet another exemplary embodiment, a welding process is disclosed that includes providing a first component formed of a first material and joining a second material to the first material by a welding technique. The second material includes:
about 15 to about 20 wt % Co;
about 10 to about 19 wt % Cr;
about 2.5 to about 3.4 wt % Al;
less than about 0.5 wt % Ta;
less than about 1.0 wt % Mo;
less than about 0.06 wt % Zr;
less than about 0.04 wt % B;
about 1.1 to about 1.5 wt % Nb;
about 3.0 to about 3.9 wt % Ti;
about 3 to about 5 wt % W;
about 0.03 to about 0.07 wt % C; and
balance Ni; wherein aluminum, titanium, niobium, and tantalum are present within the alloy in a combined amount of 9 to 14 atomic percent.

One advantage of the present disclosure includes a nickel-base superalloy having increased gamma prime strengthening and ductility.

Another advantage of the present disclosure is to provide a nickel-base superalloy matching the physical properties of a high gamma prime base alloy, thereby improving the Low Cycle Fatigue (LCF) properties of the weldment.

Other features and advantages of the present disclosure will be apparent from the following more detailed description of the preferred embodiment, taken in conjunction with the accompanying drawings which illustrate, by way of example, the principles of the disclosure.

### BRIEF DESCRIPTION OF THE DRAWINGS

Fig. 1 is an elevated perspective view of a repaired turbine bucket of a highpressure state of a turbine engine.

Fig. 2 is a perspective view of a turbine nozzle assembly of a gas turbine engine.

Wherever possible, the same reference numbers will be used throughout the drawings to represent the same parts.

### DETAILED DESCRIPTION OF THE INVENTION

Embodiments of the present disclosure provide a repair alloy for a component, a method for forming a repair region on a worn component, a method for fabricating a new component structure, and a composition for repairing and/or fabricating components. Other embodiments of the present disclosure provide a repair alloy for turbine engine components, a method for forming a repair region on a worn turbine component, a method for fabricating a new turbine component structure, and a weld composition for repairing and/or fabricating turbine engine components. The turbine engine component is typically formed of a superalloy material, such as a nickel-base or cobalt-base superalloy, known for high temperature performance in terms of tensile strength, creep resistance, and corrosion resistance.

Precipitation-strengthened nickel-base superalloys containing high levels of principal gamma prime-forming elements (aluminum, titanium, tantalum, and niobium) have proven to be difficult to weld, with typical effects including solidification shrinkage, hot tears, and cracking during and after the welding processes, and strain age cracking due to gamma prime (yp) precipitation (principally Ni₃(Al,Ti)) during post-weld vacuum heat treatment. An example of such an alloy is the nickel-base alloy commercially known as IN-738. An improved gamma-prime strengthened nickel-base superalloy meeting the needs for various gas turbine components is disclosed in commonly-assigned U.S. Patent No. 6,902,633 to King et al. The disclosed alloy contains, by weight, about 15.0 to about 17.0% chromium, about 7.0 to about 10.0% cobalt, about 1.0 to about 2.5% molybdenum, about 2.0 to about 3.2% tungsten, about 0.6 to about 2.5% columbium (niobium), less than 1.5% tantalum, about 3.0 to about 3.9% aluminum, about 3.0 to about 3.9% titanium, about 0.005 to about 0.060% zirconium, about 0.005 to about 0.030% boron, about 0.07 to about 0.15% carbon, and the balance nickel and impurities. The alloy is disclosed by King et al. as intended to have properties comparable to IN-738, but with a chemistry that allows for the reduction or complete elimination of tantalum. While achieving these goals, there is no significant difference in weldability and castability between this alloy and IN-738.

Other gamma prime strengthened superalloys, such as IN-939 and GTD-222, tend to be more readily weldable than IN-738. However, the high temperature capabilities of these weldable alloys are usually limited. Also, IN-939 tends to form Eta (η) phase, especially after long-term exposure at high temperature. Eta phase is known to cause cracking in castings, which detrimentally affects mechanical properties. Furthermore, effective weld compositions have not been developed for recently developed gamma prime strengthened superalloys with improved castability and microstructural stability, such as GTD-161, which is disclosed in commonly assigned U.S. Patent Publication Number 2007/0095441 A1, published May 3, 2007, which published from U.S. Patent Application Number 11/163,847, filed November 1, 2005, and which is incorporated herein by reference in its entirety

In one embodiment, the composition of the present disclosure may be formed into a weld wire by any known technique in the art. The weld wire may be used for repairing or fabricating hot gas path parts. For example, the weld composition may be used as filler to replace material worn from a turbine structure during operation. In another example, the weld wire may be used to weld the sidewalls of a turbine nozzle to an airfoil. In another example, the weld wire may be used to weld separate single airfoil castings together to form a doublet configuration. In yet another example, the weld wire may be used for casting salvage operations. In still yet another example, the weld wire may be used for welding of casting core holes in a post cast fabrication operation on a turbine hot gas path component.

In another embodiment, a superalloy component may be formed that includes a portion formed of a nickel-base superalloy or a cobalt base superalloy and a portion formed of the composition of the present disclosure. In a nickel-base or a cobalt-base superalloy, nickel or cobalt, respectively, is the single greatest element in the superalloy by weight. In one embodiment, the nickel-base superalloys include at least about 40 wt % Ni, and at least one component from the group consisting of cobalt, chromium, aluminum, tungsten, molybdenum, titanium, and iron. Examples of nickel-base superalloys are designated by the trade names Inconel®, Nimonic®, Rene® (e.g., Rene®80, Rene®95, Rene@142, Rene®N5 alloys, and Udiment, and include other directionally solidified and single crystal superalloys. In particular, the weld composition of this disclosure may be used for welding GTD-161. The GTD-161 alloy has the nominal composition, in weight percent, of about 10 to 19% chromium, about 15 to 20% cobalt, less than about 1.0% molybdenum, about 3 to 5% tungsten, about 1.1 to 1.5% niobium, less than about 0.5% tantalum, about 3.0 to 3.9% titanium, about 2.5 to 3.4% aluminum, about 0.07 to 0.15% carbon, less than about 0.06% zirconium, less than about 0.03% boron, the balance nickel and impurities, wherein aluminum, titanium, niobium, and tantalum are present within the alloy in a combined amount of 9 to 14 atomic percent. Examples of cobalt base superalloys are FSX-414®, MAR-M 918®, Haynes 188®, X-40®, and X-45®.

The form of the turbine engine component varies among combustor liners, combustor domes, shrouds, buckets or blades, nozzles or vanes. The component is most typically an airfoil, including stationary airfoils such as nozzles or vanes, and rotating airfoils including blades and buckets. Blades and buckets are used herein interchangeably; typically a blade is a rotating airfoil of an aircraft turbine engine, and a bucket is a rotating airfoil of a land-based power generation turbine engine. In the case of a blade or bucket, an exemplary region for repair is the tip region that is subject to wear due to rubbing contact with a surrounding shroud, and to oxidation in the high-temperature environment. In the case of a nozzle or vane, typically the area under repair is the leading or trailing edges which are subject to wear due to exposure of the highest velocity gases in the engine at elevated temperature. The composition may be used alone, as a filler material, or in combination with another insert material, such as a contoured plate that is welded in place along either edge of a nozzle or vane. The composition of the present disclosure is particularly useful for the repair of nozzles, shrouds, and buckets, manufactured from gamma prime strengthened nickel-base alloy. The composition may be formed into and utilized as a weld wire and used in the above mentioned repairs and/or fabrications.

High gamma prime-strengthened nickel-base superalloys, such as GTD-161 superalloy, are known to be difficult to weld without the occurrence of cracks developing in the weldment. The risk of cracks increases when attempting to weld a casting of such an alloy to a second casting formed of an alloy that different in terms of chemistry, crystallography, coefficient of thermal expansion, and other material properties.

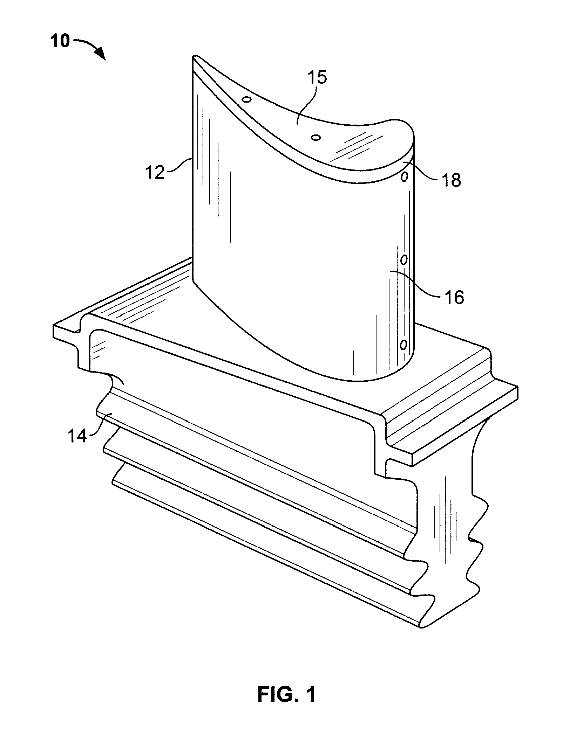

Referring to Fig. 1, a repaired airfoil, particularly, a repaired bucket 10 of a power generation turbine engine (not shown) is illustrated. The bucket 10 includes a an airfoil portion 12 and a dovetail portion 14. The airfoil portion 12 has an intact region 16, and a repaired region 18. The intact region 16 is formed of a nickel-base superalloy, examples of which are discussed above. For example, the intact region 16 may be formed of nickel-base superalloy. In one embodiment, the intact region 16 is formed of GTD-161.

Prior to repair, the bucket 10 is removed from the turbine engine, and cleaned by a conventional process to remove deposited foreign materials as well as any oxidation and corrosion. Any residual cleaning material is removed from the region near the tip 15, and the tip 15 is ground back and is then repaired by a welding technique. Tungsten arc inert gas (TIG) welding may be used, although other welding techniques may be employed, such as gas-metal arc welding, resistance welding, electron beam welding, plasma welding, and laser welding. In the TIG welding process, heat is produced between the workpiece, e.g., the tip 15 of the bucket 10, and the welding electrode. A weld wire having a composition according to an embodiment of the disclosure is used as a filler metal. Multiple passes may be made around the periphery of the tip 15 thereby building up the tip 15 to approximate the original geometry. The repair process may be completed by additional machining, as well as by other coating processes, such as overlay coatings, diffusion coatings, thermal barrier coatings, for thermal protection of the bucket 10.

The weld composition according to the disclosure has the approximate broad, preferred and nominal compositions summarized in Table 1. The disclosed weld composition has improved mechanical properties and phase stability for use in turbine nozzles, shrouds and buckets, as well as other applications in which similar properties are required. All values are in weight percent (wt %).

**TABLE 1**

| | General | Preferred | Most Preferred |
|---|---|---|---|
| Cr | 10 to 19 | 14.0 to 15.6 | 14.8 |
| Co | 15 to 20 | 16.0 to 18.0 | 17.2 |
| Mo | <1 | <0.5 | <0.25 |
| W | 3 to 5 | 3.5 to 4.0 | 3.7 |
| Nb | 1.5 to 1.5 | 1.2 to 1.4 | 1.3 |
| Ta | <0.5 | <0.25 | <0.05 |
| Ti | 3.0 to 3.9 | 3.1 to 3.4 | 3.2 |
| Al | 2.5 to 3.4 | 2.6 to 3.0 | 2.8 |
| C | 0.030 to 0.070 | 0.030 to 0.055 | 0.030 to 0.050 |
| Zr | <0.06 | <0.02 | <0.01 |
| B | <0.03 | <0.015 | <0.01 |
| Ni | balance | balance | balance |

wherein Al, Ti, Nb, and Ta are present within the alloy in a combined amount of about 9 to about 14 atomic percent.

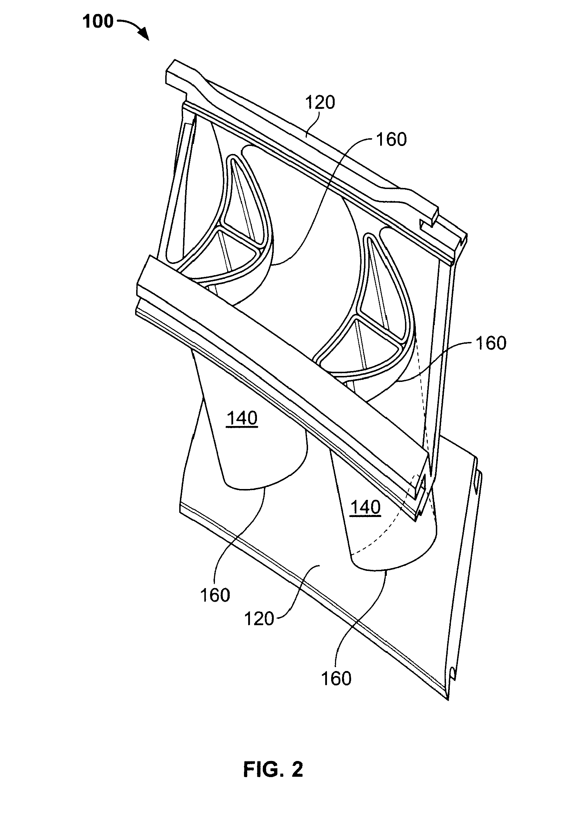

Fig. 2 represents a gas turbine engine nozzle assembly 100 including a pair of airfoils 14 welded between inner and outer bands 12. The perimeter of each airfoil 140 is received within a corresponding opening formed in the bands 120, with welds being formed along the mutually-contacting faying surfaces 160 of the bands 120 and airfoils 140. Because of the hostile operating environment of the nozzle assembly 100, the bands 120 and the airfoils 140 are all preferably formed of superalloy materials. In an embodiment of the disclosure, the airfoils 140 are castings formed of a nickel-base or cobalt-base superalloy. In one embodiment, the castings are formed of a high gamma prime-strengthened nickel-base superalloy, an example of which is GTD-161, while the bands 120 are equiaxed castings formed of a nickel-base superalloy with a lower gamma prime content. In another embodiment, the bands 120 are formed of a nickel-base or cobalt base superalloy. For example, the bands 120 may be formed of GTD-222® or FSX-414®. The GTD-222® alloy has a nominal composition, in weight percent, of about 22.5 chromium, about 14.0 cobalt, about 2.3 titanium, about 1.2 aluminum, about 2.0 tungsten, about 0.8 columbium, and about 1.0 tantalum, with the balance being nickel and incidental impurities.

Because of the different chemistries and microstructures of the bands 120 and the airfoils 140, weld joints formed to complete the assembly 100 are prone to cracking during cooldown from welding, as well as during cooling from subsequent thermal treatments. As a solution, the present disclosure forms one or both of the complementary faying surfaces 160 to include a cladding layer (not shown). The cladding layer is welded or otherwise metallurgically joined directly to the faying surface(s) 160. In one embodiment, the cladding layer is formed of a relatively weldable alloy, e.g., a superalloy that is more weldable than the least weldable of the superalloys of the bands 120 and airfoils 140. In one embodiment, the cladding layer is formed of GTD-161. In another embodiment, the cladding layer is formed of the composition of the present disclosure. In one embodiment, the cladding layer may be formed of a superalloy that is the same as the alloy for either the bands 120 or the airfoils 140. In one embodiment, the faying surfaces 160 of the airfoils 140 are provided with cladding layers, and the cladding layers have the same composition as the bands 120. As an example, the airfoils 140 are formed of GTD-161 while the cladding layers and bands 120 are formed of the more weldable composition of the present disclosure.

The cladding layers are preferably applied to the entire faying surface. A suitable thickness for the cladding layers will vary depending on the particular application. For the nozzle assembly 100, a suitable thickness range is believed to be about 0.5 to 1 millimeter, more preferably about 0.8 to about 1.0 millimeter. Alternatively, the cladding layers may have a graded composition, with a thin layer of a more ductile nickel-base alloy applied to the faying surfaces 160 of the airfoils 140, followed by a layer of a gamma prime-strengthened nickel-base superalloy, such as GTD-161 or the composition of the present disclosure. A suitable alloy for the more ductile layer is Alloy 625, applied to thickness of about 0.2 to about 0.45 millimeters, more preferably about 0.35 to about 0.45 millimeters.

The cladding layer is preferably applied by a low-dilution welding process, which results in the cladding alloy becoming at least partially diffused into the underlying surface. After the cladding operation, the casting on which the cladding layer was applied (e.g., an airfoil 140) preferably undergoes post-weld annealing to relieve stresses induced by the welding process. A suitable annealing treatment involves soaking the casting at a temperature of about 1000°C for about 2 hours. The cladding layer is then preferably machined to ensure an accurate fit the with mating faying surface 160 of the second casting (e.g., a band 140). Suitable machining techniques for this purpose include, but are not limited to grinding, milling, and electrical-discharge machining (EDM). Thereafter, the castings are assembled and then welded. In one embodiment, the castings are formed of GTD-161 and the weld composition is the composition of the present disclosure. Both the cladding and welding processes are preferably chosen to address those variables known to contribute to the propensity for defects, such as excessive heat input, weld volume and residual stresses, and dilution of the superalloy castings. In view of these considerations, one embodiment utilizes plasma transferred arc (PTA) welding. Another embodiment utilizes laser welding using a beam focused to limit melting to primarily the cladding layer. It is foreseeable that other welding techniques could possibly be used.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A nickel-base composition, comprising
a. about 15 to about 20 wt % Co;
b. about 10 to about 19 wt % Cr;
c. about 2.5 to about 3.4 wt % Al;
d. less than about 0.5 wt % Ta;
e. less than about 1.0 wt % Mo;
f. less than about 0.06 wt % Zr;
g. less than about 0.04 wt % B;
h. about 1.1 to about 1.5 wt % Nb;
i. about 3.0 to about 3.9 wt % Ti;
j. about 3 to about 5 wt % W;
k. about 0.03 to about 0.07 wt % C; and
l. balance Ni; wherein aluminum, titanium, niobium, and tantalum are present within the alloy in a combined amount of about 9 to 14 atomic percent.

2. The composition of claim 1, wherein the amount of C is about 0.030 to about 0.055 wt %.

3. The composition of claim 1 or claim 2, wherein the amount of C is about 0.030 to about 0.050 wt %.

4. The composition of any preceding claim, wherein the amount of Cr is about 14.0 to about 15.6 wt %.

5. The composition of any preceding claim, wherein the amount of Co is about 16.0 to about 18.0 wt %.

6. The composition of any preceding claim, wherein the amount of W is about 3.5 to about 4.0 wt %.

7. The composition of any preceding claim, wherein the amount of Mo is less than about 0.05 wt %.

8. The composition of any preceding claim, wherein the amount of Ti is about 3.1 to about 3.4 wt %, the amount of Al is about 2.6 to about 3.0 wt %, the amount of Nb is about 1.2 to about 1.4 wt %, and the amount of Ta is less than about 0.25 wt %.

9. A turbine component comprising the composition of any preceding claim.

10. A method of welding using the composition of any one of claims 1 to 8.
